# EUROPEAN PATENT SPECIFICATION

(11) **EP 4 400 999 B1**
(45) Date of publication and mention of the grant of the patent: **01.04.2026**
(21) Application number: 23869660.3
(22) Date of filing: 23.05.2023
(51) Int. Cl.: G06F 30/394, G06F 30/392, G06F 111/04

(54) **ROUTING METHOD AND APPARATUS FOR CIRCUIT LAYOUT, DEVICE, STORAGE MEDIUM, AND PRODUCT**
ROUTINGVERFAHREN UND -VORRICHTUNG FÜR SCHALTUNGSLAYOUT, VORRICHTUNG, SPEICHERMEDIUM UND PRODUKT
PROCÉDÉ ET APPAREIL DE ROUTAGE POUR AGENCEMENT DE CIRCUIT, DISPOSITIF, SUPPORT DE STOCKAGE ET PRODUIT

(30) Priority: 30.09.2022 CN 202211210801
(43) Date of publication of application: 17.07.2024
(73) Proprietor: Tencent Technology (Shenzhen) Company Limited, Shenzhen, Guangdong, 518057 (CN)
(72) Inventor: MA, Shengming, Shenzhen, Guangdong 518057 (CN); CHEN, Yue, Shenzhen, Guangdong 518057 (CN); WANG, Jianming, Shenzhen, Guangdong 518057 (CN); HUAI, Sainan, Shenzhen, Guangdong 518057 (CN); ZHANG, Shengyu, Shenzhen, Guangdong 518057 (CN); XU, Xiong, Shenzhen, Guangdong 518057 (CN)
(74) Representative: Novagraaf International SA
(86) International application number: PCT/CN2023/095685
(87) International publication number: WO 2024/066407

(56) References cited:
- CN-A- 111 680 471
- CN-A- 112 818 626
- CN-A- 113 745 791
- CN-A- 114 021 519
- CN-A- 114 970 439
- JP-A- 2005 203 632

## Description

### RELATED APPLICATION

This application claims priority to Chinese Patent Application No. 202211210801.1, filed on September 30, 2022 and entitled "CIRCUIT LAYOUT ROUTING METHOD AND APPARATUS, DEVICE, STORAGE MEDIUM, AND PRODUCT".

### FIELD OF THE TECHNOLOGY

Embodiments of the present disclosure relate to the field of micro-nano processing technologies, and in particular, to a circuit layout routing method and apparatus, a device, a storage medium, and a product.

### BACKGROUND OF THE DISCLOSURE

In micro-nano processing technologies, automatic routing is a circuit arrangement during automatically designing of circuit layout by using software.

In related technologies, according to an automatic routing algorithm, a routing region is usually divided into a plurality of grids or rectangular regions, and a routing path is controlled to be arranged along grid lines or a routing path is controlled to pass through rectangular region, to connect components or solder joints in the routing region.

However, the routing path obtained based on the solution in the foregoing related technologies is a horizontal and vertical path, and there is usually a large bend at a turning point. This does not meet design requirements of some chips requiring routing having a small curvature, and affects an applicable scope of the foregoing automatic routing algorithm.

Related technologies are known from CN 114021519 A, CN 113745791 A and CN 111680471 A.

### SUMMARY

The invention is set out in the appended set of claims.

Embodiments of the present disclosure provide a circuit layout routing method and apparatus, a device, a storage medium, and a product, capable of producing a turning with a small curvature in a routing path during automatic routing, thereby expanding an applicable scope of an automatic routing algorithm. The technical solutions are as follows:

According to an aspect of embodiments of the present disclosure, a circuit layout routing method is provided, performed by a computer device. The method includes:
obtaining position information of at least one routing point in a circuit layout from routing planning information of the circuit layout;
calculating, based on the position information, a turning starting position and a turning radius corresponding to each of the at least one routing point; and
generating a routing path through the at least one routing point based on the turning starting position and the turning radius, the routing path turning at the turning starting position with the turning radius.

According to an aspect of embodiments of the present disclosure, a circuit layout routing apparatus is provided. The apparatus includes:
a first obtaining module, configured to obtain position information of at least one routing point in a circuit layout from routing planning information of the circuit layout;
a second obtaining module, configured to calculate, based on the position information, a turning starting position and a turning radius corresponding to each of the at least one routing point; and
a path generating module, configured to generate a routing path through the at least one routing point based on the turning starting position and the turning radius, the routing path turning at the turning starting position with the turning radius.

In a possible implementation, the at least one routing point includes n routing points, n being greater than or equal to 2 and n being an integer; and
the second obtaining module is configured to
obtain a sorting order of the n routing points;
obtain auxiliary frames of the n routing points based on the sorting order of the n routing points and the position information of the n routing points, the auxiliary frames of the n routing points not overlapping each other, the auxiliary frames being U-shaped square frames, and opening directions of the auxiliary frames being the same as routing extension directions at the routing points, and centers of the auxiliary frames being located on extension lines starting at the routing points; and
calculate, based on the auxiliary frames of the n routing points, turning starting positions and turning radii corresponding to the n routing points,
the turning starting positions of the routing points being obtained based on offsets between the centers of the auxiliary frames of the routing points and the routing points, and the turning radii of the routing points being obtained based on side lengths of the auxiliary frames of the routing points.

In a possible implementation, the offsets of the n routing points increase according to the sorting order.

In a possible implementation, the side lengths of the auxiliary frames of the n routing points increase according to the sorting order.

In a possible implementation, the second obtaining module is configured to obtain the auxiliary frames of the n routing points based on the sorting order of the n routing points, position information of components in the extension directions at the n routing points, and the position information of the n routing points.

In a possible implementation, the second obtaining module is configured to sort positions of the n routing points according to reverse directions of the turning directions to obtain the sorting order of the n routing points.

In a possible implementation, the first obtaining module is configured to traverse position information of each routing point in the routing planning information to obtain the position information of the n routing points,
turning directions of the n routing points being the same, and position information of any two adjacent routing points among the n routing points satisfying a specified condition.

In a possible implementation, the specified condition includes:
a difference between abscissas of the any two adjacent routing points is less than a first difference threshold, and a difference between ordinates of the any two adjacent routing points is less than a second difference threshold.

In a possible implementation, the path generating module is configured to
obtain a turning angle of a first routing point based on a turning starting position of the first routing point, a turning radius of the first routing point, and position information of a target routing point corresponding to the first routing point, the first routing point being any one of the at least one routing point; and
generate a routing path of the first routing point based on the turning starting position of the first routing point, the turning radius of the first routing point, and the turning angle of the first routing point.

According to another aspect, a chip product is provided. The chip product includes: at least one routing point,
the at least one routing point having a turning starting position and a turning radius on each routing path, and the routing path turning at the turning starting position with the turning radius.

According to another aspect, a computer device is provided, including a processor and a memory, the memory having at least one computer instruction stored therein, and the at least one computer instruction being loaded and executed by the processor to implement the foregoing circuit layout routing method.

According to still another aspect, a computer-readable storage medium is provided, the storage medium having at least one computer instruction stored thereon, and the at least one computer instruction being loaded and executed by a processor to implement the foregoing circuit layout routing method.

According to still another aspect, a computer program product or a computer program is provided. The computer program product or the computer program includes computer instructions. The computer instructions are stored in a computer-readable storage medium. A processor of a computer device reads the computer instructions from the computer-readable storage medium. The processor executes the computer instructions, so that the computer device performs the foregoing circuit layout routing method.

The technical solutions provided in embodiments of the present disclosure include at least the following beneficial effects:
Based on position information of at least one routing point, a turning starting position where turning starts at the routing point and a turning radius corresponding to a turning curvature are obtained. Based on the obtained turning starting position and turning radius, a routing path is controlled to turn, to control the turning curvature of the routing path during automatic routing, so that an automatic routing algorithm is applicable to automatic routing of a chip that has a requirement in a turning curvature, thereby expanding an applicable scenario of the automatic routing algorithm.

### BRIEF DESCRIPTION OF THE DRAWINGS

FIG. 1 is a schematic diagram of an application scenario of a superconducting quantum chip according to an embodiment of the present disclosure.
FIG. 2 is a schematic diagram of classic automatic routing according to the present disclosure.
FIG. 3 is a schematic diagram of a CPW line according to the present disclosure.
FIG. 4 is a flowchart of a circuit layout routing method according to an embodiment of the present disclosure.
FIG. 5 is a schematic diagram of dense regions according to the present disclosure.
FIG. 6 is a schematic diagram of simulating CPW routing by using an airport according to the present disclosure.
FIG. 7 is a flowchart of a circuit layout routing method according to an embodiment of the present disclosure.
FIG. 8 is a schematic diagram of routing point sorting according to the embodiment shown in FIG. 7.
FIG. 9 is a schematic diagram of an offset setting according to the embodiment shown in FIG. 7.
FIG. 10 is a schematic diagram of a turning radius according to the embodiment shown in FIG. 7.
FIG. 11 is a schematic diagram of routing paths according to the embodiment shown in FIG. 7.
FIG. 12 is a flowchart of processing of an automatic routing algorithm according to the embodiment shown in FIG. 7.
FIG. 13 is a schematic diagram of routing paths of a chip product according to an embodiment of the present disclosure.
FIG. 14 is a block diagram of a structure of a circuit layout routing apparatus according to an embodiment of the present disclosure.
FIG. 15 is a schematic diagram of a structure of a computer device according to an embodiment of the present disclosure.

### DESCRIPTION OF EMBODIMENTS

Before embodiments of the present disclosure are described, some terms related to the present disclosure are first defined and described.
(1) Superconducting quantum chip: It is a central processing unit of a superconducting quantum computer. A quantum computer is a machine that uses principles of quantum mechanics to perform calculations. Based on the superposition principle and the quantum entanglement of the quantum mechanics, the quantum computer has a strong parallel processing capability and may resolve some problems that are difficult for a classical computer to calculate. Due to a zero-resistance characteristic of a superconducting quantum bit and a manufacturing process of the superconducting quantum bit similar to that of an integrated circuit, a quantum computing system constructed using the superconducting quantum bit is one of the most promising systems for achieving practical quantum computing.

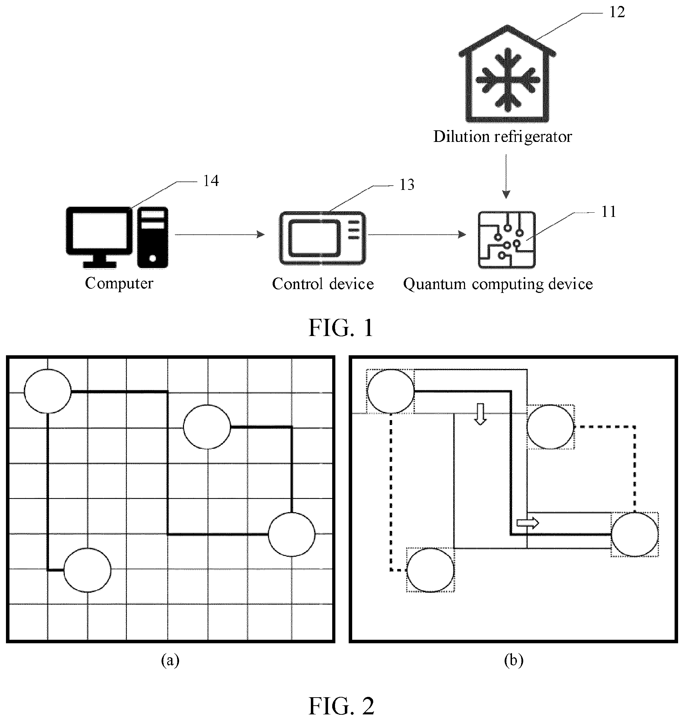

FIG. 1 is a schematic diagram of an application scenario of a superconducting quantum chip according to an embodiment of the present disclosure. As shown in FIG. 1, the application scenario may be a superconducting quantum computing platform. The application scenario includes: a quantum computing device 11, a dilution refrigerator 12, a control device 13, and a computer 14.

The quantum computing device 11 is a circuit that operates on a physical quantum bit. The quantum computing device 11 may be implemented as a quantum chip, such as a superconducting quantum chip at a temperature near absolute zero. The dilution refrigerator 12 is configured to provide an absolute zero environment for the superconducting quantum chip.

The control device 13 is configured to control the quantum computing device 11, and the computer 14 is configured to control the control device 13. For example, a written quantum program is compiled into an instruction by software in the computer 14 and the instruction is transmitted to the control device 13 (such as an electronic/microwave control system). The control device 13 converts the foregoing instruction into an electronic/microwave control signal and inputs the electronic/microwave control signal to the dilution refrigerator 12, to control a superconducting quantum bit at a temperature less than 10 mK. A read process is opposite to the foregoing process, and a read waveform is transmitted to the quantum computing device 11.

(2) Electronic design automation (EDA): It is a design method in the electronic field, and means using computer software (auxiliary design software) to complete design work in the electronic field and implement automation in design. Functional design, functional verification, placement and routing, and another process of an integrated circuit chip are included. Software tools used in the processes are collectively referred to as EDA tools.

(3) Automatic routing: Indicates using software to automatically complete circuit arrangement in circuit design and chip design, and connecting components according to a rule and a requirement. The automatic routing is mostly used in large-scale and ultra-large-scale integrated circuit design, is a link of the large-scale and ultra-large-scale integrated circuit design, and is usually performed after layout placement is completed.

(4) Layout: It is also referred to as a circuit layout, and is a design diagram that describes how components in a circuit are placed, arranged, and connected. It is a planar geometric shape description of a physical condition of a real circuit. Layout design needs to comply with constraints such as a manufacturing process, timing, an area, and power consumption. A layout design file includes information about a shape, an area, and a position of each hardware unit on a chip.

(5) Component: It is a general term for parts and devices, and is an electronic member and a constituent element in a circuit, such as a resistor, a capacitor, and an inductor.

(6) Coplanar waveguide (CPW): It includes a central conductor on a substrate and coplanar ground layers on both sides of the substrate. It is an easy-to-process microwave planar transmission line having superior performance, and is used for transmitting a microwave signal. A coplanar waveguide technology is broadly used in the superconducting quantum chip.

(7) Radius of curvature: The radius of curvature is a reciprocal of a curvature, represented by R. For a curve, the radius of curvature is equal to a radius of a circular arc which best approximates the curve at a point

(8) Topology: The topology is a branch of science that is concerned with topological space, is developed from geometry and set theory, and is mainly concerned with a property of a geometric figure or space that is preserved under continuous deformations. The topology is concerned with concepts such as space, a dimension, and transformation. **In** the topology, only a positional relationship between objects is considered rather than a shape and a size of the objects. Topological routing is a routing method based on a topological structure and a topological network.

(9) Pad: The pad is on a circuit board and is used for connecting electronic components and circuits. Solder is usually used on the pad to solder and fix pins of the components to the circuit board. For a classic circuit, the pad is usually a polygonal piece of copper. For the superconducting quantum chip, a shape and a structure of the pad are different.

In classic automatic routing refers to single-line arrangement in a geometric form. FIG. 2 is a schematic diagram of classic automatic routing according to the present disclosure. For example, in grid routing of the classic automatic routing, checkerboard-style grids are used to cover an entire routing region. Components on a layout are placed in the grids like chess pieces, and routing paths follow horizontal and vertical grid lines, as shown in part (a) of FIG. 2. Shape routing of the classic automatic routing is improved from the grid routing. A characteristic of the shape routing is to use graphics such as rectangles to replace the grids, divide the routing region into a plurality of rectangular regions, and enable the routing paths to pass through the rectangles in sequence, as shown in part (b) of FIG. 2. The geometric routing algorithms need an auxiliary positioning function. The routing paths are determined based on geometric coordinates and geometric characteristics of the components.

According to an aspect, the foregoing classic routing methods are sequential and routing one by one is needed. This leads to more difficult routing later, lower routing efficiency, and a very long line. Current circuit design is increasingly complex, making an automatic routing tool based on grid and geometry methods increasingly limited. According to another aspect, in the classic automatic routing algorithm, a physical characteristic that is required by design requirements of some chips (such as a quantum chip, specifically a superconducting quantum chip) requiring turning with a small curvature is not considered. During dealing with such chips having more complex layouts, the routing algorithm may generate a line having a turning radius that does not meet the design requirements, and cannot be customized to expand a radius of curvature of a chip line.

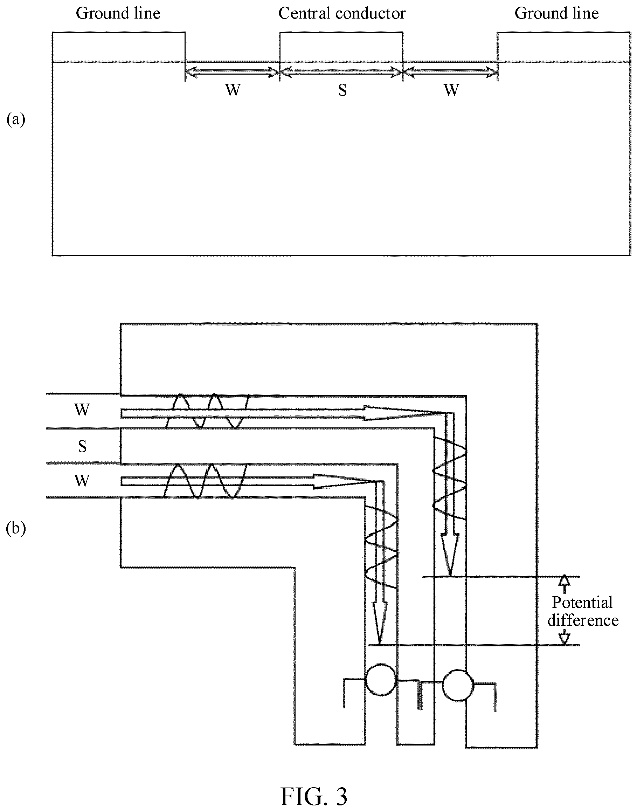

A superconducting quantum chip is used as an example. When a number of physical quantum bits in the quantum chip increases, a number of bit controls and signal lines such as reading corresponding to the physical quantum bits also increases. Due to limitations of chip size and layout space, the signal lines may be densely arranged in some regions. In the superconducting quantum chip, a signal line is generally implemented by using a coplanar waveguide (CPW). FIG. 3 is a schematic diagram of a CPW line according to the present disclosure. A structure of the CPW line is shown in part (a) of FIG. 3. The CPW line includes a central conductor on a substrate and ground lines on both sides of the substrate. The center conductor and the ground lines are both made of metal films. Therefore, when a microwave is propagated in the CPW line, an electric field is distributed in the air, the substrate, and a metal layer. The CPW is different from signal lines in a classic chip. As shown in part (b) of FIG. 3, when a path of the CPW is greatly bent, a potential difference is caused. Therefore, a parasitic mode is to be produced in a circuit and coupled with a CPW mode, causing a great impact on a transmission characteristic of the circuit. Therefore, a routing algorithm and rule of classical EDA cannot be directly applied to the automatic routing of the superconducting quantum chip.

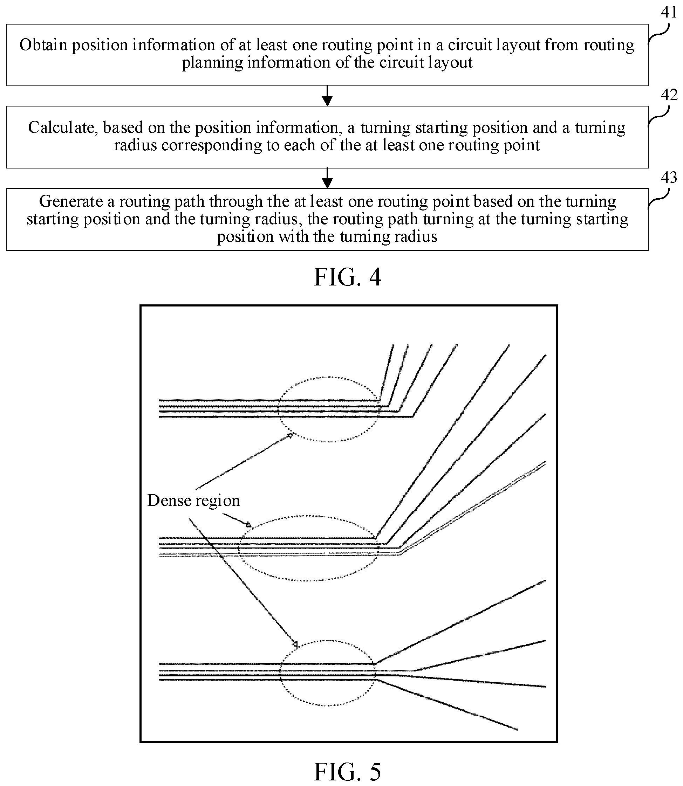

For the foregoing problems, refer to FIG. 4. FIG. 4 is a flowchart of a circuit layout routing method according to an embodiment of the present disclosure. Each step of the method may be executed by a computer device. The method may include the following steps:
Step 41. Obtain position information of at least one routing point in a circuit layout from routing planning information of the circuit layout.

In one embodiment, the routing point is an endpoint of a routing path in the circuit layout, or the routing point is a node that a routing path in the circuit layout passes through.

The routing point may be a node of a pin of a component or a solder joint in the circuit layout, or the routing point may alternatively be a node on an extension line of a pin of a component or a solder joint. A routing path can be provided between two routing points. Step 42. Calculate, based on the position information, a turning starting position and a turning radius corresponding to each of the at least one routing point.

The foregoing turning radius may be a radius of a circle in which an arc formed by turning of the routing path is located.

In the embodiments of the present disclosure including the embodiments of both the claims and the specification (hereinafter referred to as "all embodiments of the present disclosure"), a position in which the routing point is located is preferably used as a start point, and an auxiliary frame is preferably provided in a routing extension direction at the routing point. The auxiliary frame is a U-shaped square frame. An opening direction of the auxiliary frame is the same as the routing extension direction at the routing point, and a center of the auxiliary frame is located on an extension line starting at the routing point. A midpoint of a line between the center of the auxiliary frame and the routing point is used as the turning starting position, and a side length of the auxiliary frame is used as the turning radius.

Normally, a pair of routing points may not be directly connected by a horizontal or vertical line, or there may be other components or solder joints between a pair of routing points. Therefore, a routing path between the pair of routing points needs to turn one or more times. In embodiments of the present disclosure, based on a position of at least one routing point, a position where turning starts at the routing point on a later routing path may be determined, as well as a turning radius, so that a turning region of the later routing path can be controlled.

Step 43. Generate a routing path through the at least one routing point based on the turning starting position and the turning radius, the routing path turning at the turning starting position with the turning radius.

Each routing point of the at least one routing point corresponds to a routing path. For example, when there are n routing points, n routing paths may be generated.

In all embodiments of the present disclosure, after the turning starting position and the turning radius corresponding to each of the at least one routing point on the later routing path are determined, the later routing path after the routing point is preferably extended to the turning starting position and then turns with the turning radius, to obtain the routing path of each of the at least one routing point. In conclusion, in the solutions shown in embodiments of the present disclosure, based on position information of at least one routing point, a turning starting position where turning starts at the routing point and a turning radius corresponding to a turning curvature are obtained. Based on the obtained turning starting position and turning radius, a routing path is controlled to turn, to control the turning curvature of the routing path during automatic routing, so that an automatic routing algorithm is applicable to automatic routing of a chip that has a requirement in a turning curvature, thereby expanding an applicable scenario of the automatic routing algorithm.

Based on the foregoing solution shown in FIG. 4, automatic routing software/tools can determine a dense region of routing points in a circuit layout by traversing position information of each routing point in routing planning information, and control a turning curvature in a routing path of a routing point in the dense region to reduce a calculation amount of automatic routing.

For example, in a superconducting quantum chip, due to limitations of a layout size, layout space, and another factor, a plurality of groups of CPW lines may be arranged closely in specific positions. A region in which the CPW lines are arranged closely may be referred to as a dense region. FIG. 5 is a schematic diagram of dense regions according to the present disclosure.

In the solution provided in embodiments of the present disclosure, based on a superconducting quantum chip pad and pin docking algorithm, a position of a U-shaped square (represented by an "airport") and a track sequence are provided to achieve a goal of suppressing large curvature routing in the dense regions.

Specifically, the U-shaped square may be placed at an endpoint of a CPW line to be connected in a dense region to guide a direction of a turning arc of the CPW. A radius of the arc may be positively correlated with a side length of the U-shaped square (for example, may be half the side length of the U-shaped square). Therefore, a size of the U-shaped square may be changed according to actual needs. A larger needed radius of curvature indicates a larger size of the U-shaped square.

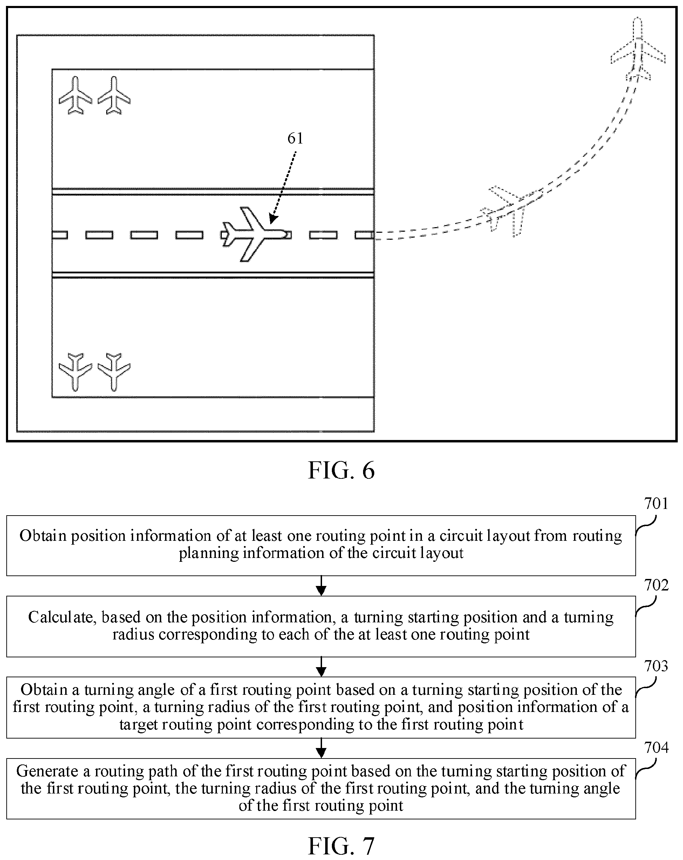

The foregoing algorithm may be visualized using a passenger plane taking off from an airport runway. FIG. 6 is a schematic diagram of simulating CPW routing by using an airport according to the present disclosure. As shown in FIG. 6, the "airport" is a U-shaped square in actual routing, and the "runway" inside the airport is a fixed CPW routing path. A "passenger plane" 61 is a head of the routing. After reaching the end of the runway, the passenger plane takes off and turns according to a predetermined arc path, which is corresponding to turning with a small curvature in automatic routing.

FIG. 7 is a flowchart of a circuit layout routing method according to an embodiment of the present disclosure. Each step of the method may be executed by a computer device. The method may include the following steps:
Step 701. Obtain position information of at least one routing point in a circuit layout from routing planning information of the circuit layout.

In a possible implementation, the foregoing circuit layout may be a circuit layout of a quantum chip, for example, may be a circuit layout of a superconducting quantum chip.

In the solution shown in embodiments of the present disclosure, a single routing point may be processed, or two or more routing points may be processed.

During processing the two or more routing points, the position information of the at least one routing point includes position information of n routing points, n being greater than or equal to 2 and n being an integer.

In this case, in some possible implementations, the step of obtaining position information of at least one routing point in a circuit layout from routing planning information of the circuit layout includes:
traversing position information of each routing point in the routing planning information to obtain the position information of the n routing points,
turning directions of the n routing points being the same, and position information of any two adjacent routing points among the n routing points satisfying a specified condition.

In some possible implementations, the foregoing specified condition includes:
a difference between abscissas of the any two adjacent routing points is less than a first difference threshold, and a difference between ordinates of the any two adjacent routing points is less than a second difference threshold.

In embodiments of the present disclosure, automatic routing software/tools can determine a dense region of routing points in a circuit layout by traversing position information of each routing point in routing planning information, and control a turning curvature in a routing path of a routing point in the dense region.

For example, in a superconducting quantum chip, due to limitations of a layout size, layout space, and another factor, a plurality of groups of CPW lines may be arranged closely in specific positions. A region in which the CPW lines are arranged closely may be referred to as a dense region. FIG. 5 is a schematic diagram of dense regions according to an embodiment of the present disclosure.

It is assumed that a number of routing points (terminals) in the circuit layout is t, t ∈ T, and a U-shaped square generated for each routing point tᵢ is denoted as p(tᵢ).

If a point set A ∈ T, that is, A is a proper subset of T, ∀tᵢ ∈ A, and for all tₖ satisfying that p(tᵢ)∩p(tₖ) is non-empty, tₖ ∈ A, then the point set A is referred to be complete.

A dense region point set A(tᵢ) generated from tᵢ is defined as a minimum complete subset of T including tᵢ.

It is assumed that a number of points in a specific dense region A is N, and it can be observed that ∀tᵢ ∈ A(t), and A(tᵢ) = A(t).

To determine whether points t₁ and t₂ satisfy that p(tᵢ)∩p(tₖ) is non-empty, it can be determined based on whether a difference between abscissas and a difference between ordinates of t₁ and t₂ are less than 2 times a neighborhood parameter. In other words, |x₁ - x₂| < 2 _{*} neighborhhood1, and |y₁ *-* y₂| < 2 * neighborhhood2.

The foregoing 2 _{*} neighborhhood1 is a first difference threshold, and the foregoing 2 _{*} neighborhhood2 is a second difference threshold. The foregoing neighborhhood1 and neighborhhood2 may be the same or different.

In one embodiment, the foregoing first difference threshold and second difference threshold may also be set to different parameter values.

During traversing the position information of each routing point in the routing planning information, when coordinates of a traversed routing point and coordinates of a previously traversed routing point satisfy a condition that a difference between abscissas is less than the first difference threshold, a difference between ordinates is less than the second difference threshold, and turning directions at the two routing points are the same, the currently traversed routing point is added to a point set corresponding to the previously traversed routing point. According to the foregoing method, one or more point sets can be traversed from the routing planning information, and are corresponding to one or more dense regions. Then, a routing point in any point set can be obtained as the at least one routing point, and the position information of the at least one routing point can be obtained.

For example, refer to the bottom group of CPW routing lines in FIG. 5 above. The four CPW lines are divided into two groups. Turning directions of the upper two CPW lines and the lower two CPW lines are different. Correspondingly, the computer device may divide the four CPW lines into two independent dense regions (that is, the upper two CPW lines form one dense region, and the lower two CPW lines form another dense region), and perform subsequent processing respectively.

The foregoing turning directions may be determined by positional relationships between the routing points and end points of routing paths of the routing points.

The foregoing turning directions are directions perpendicular to extension directions at the current routing points. For example, using that the extension directions at the current routing points are forward as an example, the foregoing turning directions may be left or right.

Step 702. Calculate, based on the position information, a turning starting position and a turning radius corresponding to each of the at least one routing point.

In a possible implementation, in a case that the at one routing point includes n routing points, n being greater than or equal to 2 and n being an integer, the step of obtaining, based on the position information of the at least one routing point, a turning starting position and a turning radius corresponding to each of the at least one routing point includes:
S702a. Obtain a sorting order of the n routing points.

In response to routing in a dense region, usually a plurality of pairs of CPWs are to turn. For the CPWs to turn smoothly without interfering with each other, it is necessary to decide which pair of CPWs is to turn first, which may be vividly compared to sorting a take-off sequence of "passenger planes" in the present disclosure.

In a possible implementation, turning directions of the routing paths of the n routing points are the same, and the obtaining a sorting order of the n routing points includes:
sorting positions of the n routing points according to reverse directions of the turning directions to obtain the sorting order of the n routing points.

An algorithm provided in embodiments of the present disclosure may refer to a setting method for tracks and starting positions of athletes in a track and field long-distance running event. The inside of track and field tracks is the first to turn and has the smallest turning radius. Due to a greater curvature of the inside curve, athletes on the inside tracks also need to stand further back when starting running.

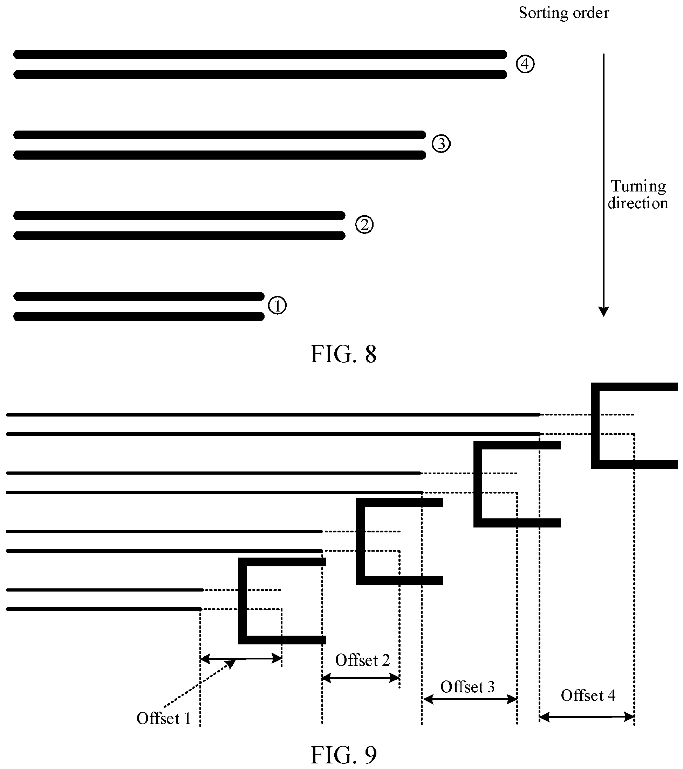

Similarly, FIG. 8 is a schematic diagram of routing point sorting according to an embodiment of the present disclosure. As shown in FIG. 8, when the CPWs turn, a CPW located on the inside is to turn first with the smallest turning radius (but not less than a minimum radius that meets design requirements), to give turning space to the remaining CPW lines on the outside. In this way, by sorting from the inside out, a turning order of each pair of CPWs is determined. The foregoing sorting from inside out is sorting according to reverse directions of the turning directions.

S702b. Obtain auxiliary frames of the n routing points based on the sorting order of the n routing points and the position information of the n routing points, the auxiliary frames of the n routing points not overlapping each other, the auxiliary frames being U-shaped square frames, and opening directions of the auxiliary frames being the same as routing extension directions at the routing points, and centers of the auxiliary frames being located on extension lines starting at the routing points; and

In all embodiments of the present disclosure, after the position information of the n routing points in the circuit layout and the sorting order of the n routing points are determined, an auxiliary frame determining order corresponding to the n routing points is preferably determined according to the sorting order. According to the auxiliary frame determining order, auxiliary frames are sequentially arranged in the routing extension directions at the n routing points, to obtain the auxiliary frames of the n routing points.

Based on the auxiliary frames of the n routing points, turning starting positions and turning radii of the n routing points are obtained.

In all embodiments of the present disclosure, for the auxiliary frames of the n routing points, a midpoint of a line between the center of an auxiliary frame corresponding to an i^{th} routing point and the i^{th} routing point is preferably used as a turning starting position, and a side length of the auxiliary frame is preferably used as a turning radius. i is a positive integer.

The turning starting positions of the routing points are obtained based on offsets between centers of the auxiliary frames of the routing points and the routing points. The turning radii of the routing points are obtained based on side lengths of the auxiliary frames of the routing points.

In a possible implementation, the offsets of the n routing points increase according to the sorting order.

In a possible implementation, the side lengths of the auxiliary frames of the n routing points increase according to the sorting order.

After the foregoing sorting order (corresponding to a turning order in the foregoing airport) is determined, based on the turning order, the U-shaped square, the "airport", for controlling a radius of curvature of turning may be established at a position in which the CPW in the dense region is to turn. In this case, it is necessary to consider where to place the "airport".

In real life, airports are scattered in different provinces and cities based on a city size, population density, a geographical location condition, and another factor. A city usually only has one or two airports at most, and the airports are not too close to each other to avoid a conflict in a route and scheduling between the airports.

In addition, during routing, for the algorithm in the present disclosure, it is necessary to avoid mutual intersection and overlap between the U-shaped squares on the CPWs, because this may cause an error in the automatic routing. In addition, it is also necessary to avoid mutual obstruction and interference when the CPWs turn. Therefore, in the solution shown in embodiments of the present disclosure, density of U-shaped squares in each dense region may be specifically controlled. If a distance between the U-shaped squares is too close, turning space is to be limited or the CPWs are to be too close. If a distance between the U-shaped squares is too far, a waste of layout space is to be caused and even routing in another place is to be affected.

In the solution shown in embodiments of the present disclosure, in the dense region, each pair of CPWs are provided with "airports" before turning. There may be a plurality of U-shaped squares in a dense region. To prevent the U-shaped squares from interfering and obstructing each other, an offset parameter may be set for each "airport" to control a horizontal distance and a take-off sequence of the "airport" while the layout space is enough.

For example, FIG. 9 is a schematic diagram of an offset setting according to an embodiment of the present disclosure. As shown in FIG. 9, in the solution shown in embodiments of the present disclosure, an offset parameter (that is, the foregoing offset) is set. The offset parameter is a horizontal distance offset between the middle of the "airport" (the center of the U-shaped square) and the end of an original layout CPW straight line near a turning point, for adjusting density between the airports. The foregoing offset value may be non-fixed. In other words, the offset can be increased sequentially according to the foregoing sorting order. A difference between offsets of adjacent routing points may be preset by a developer or a designer, or may be determined based on layout information. In addition, in dense regions at different positions on the layout, due to different surrounding environments, required offsets are not uniform. Therefore, in the solution shown in embodiments of the present disclosure, independent offsets may be respectively set for different dense regions.

In a possible implementation, the obtaining auxiliary frames of the n routing points based on the sorting order of the n routing points and the position information of the n routing points includes:
obtaining the auxiliary frames of the n routing points based on the sorting order of the n routing points, position information of components in the extension directions at the n routing points, and the position information of the n routing points.

In some embodiments, the computer device determines offset values based on the position information of the components in the extension directions at the n routing points and the position information of the n routing points, and determines, based on the determined offset values and according to the auxiliary frame determining order, the auxiliary frames corresponding to the n routing points in sequence.

For example, according to the algorithm shown in embodiments of the present disclosure, based on layout information around the dense region, including distances between the dense region and components, obstacles, and the like, possible offset values may be traversed and searched, and an appropriate solution is set. Therefore, the "airports" do not affect or overlap each other, and occupation of layout space is simultaneously minimized as much as possible.

In addition, if the CPWs turn according to predetermined trajectories, radii of curvature of the CPWs need to be set respectively according to the design requirements.

A characteristic of the algorithm in embodiments of the present disclosure is to use the U-shaped square to set the radius of curvature when the CPW turns and guide the turning. For example, the radius of curvature when the CPW turns may be set to half a side length of the U-shaped square. To increase the turning radius, the side length of the square just needs to be increased accordingly.

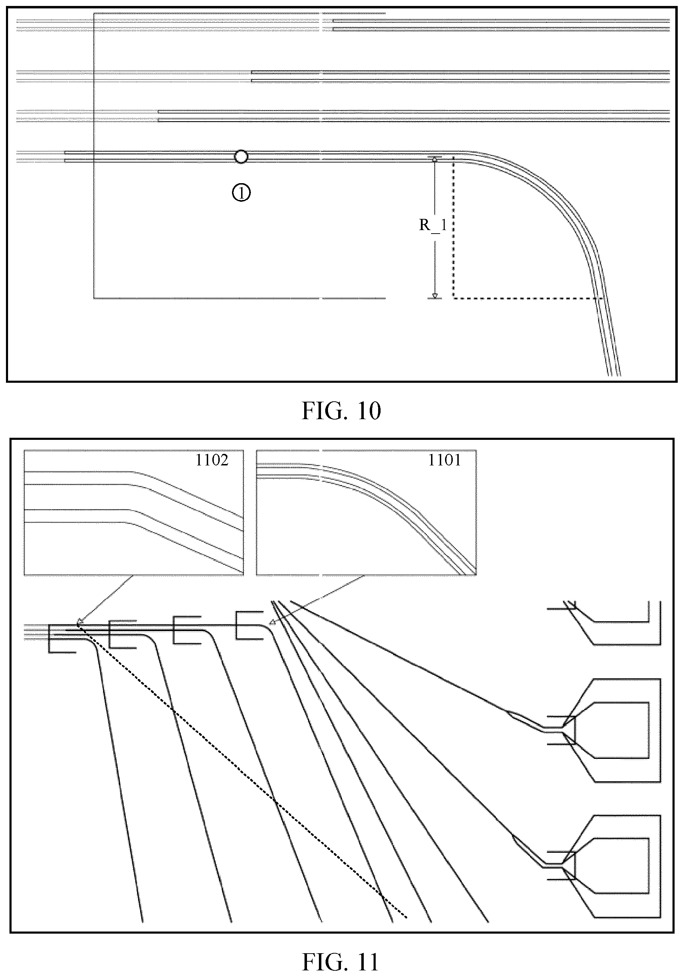

The turning of the CPW is performed according to the foregoing sorting order. FIG. 10 is a schematic diagram of a turning radius according to an embodiment of the present disclosure. FIG. 10 shows an arc turning performed by a CPW with order 1 in a dense region, and a radius of curvature of the arc is R_1. In response to continuing to set a turning path, a radius of curvature set for a turning later in the order in the same dense region may be larger to avoid a CPW arc that is earlier in the order. In one embodiment, an initial value and an increase of the radius of curvature are selected by automatically traversing values (for example, are increased from a minimum design requirement) until an optimal solution is obtained.

Alternatively, the initial value and the increase of the foregoing radius of curvature may be preset by the developer or the designer.

In a possible implementation, an example in which the radius of curvature when the CPW turns is set as half the side length of the U-shaped square is used. When determining the auxiliary frames of the n routing points, the computer device first sets the side lengths of the auxiliary frames and the offset values of the n routing points as initial side lengths and initial offset values. Then, according to the sorting order of the n routing points and a pre-specified side length increasing step and offset value increasing step, the computer device determines a side length and an offset value of an auxiliary frame of each routing point in sequence, so that an auxiliary frame of a current routing point does not overlap an auxiliary frame of a previous routing point, and a side length of the auxiliary frame of the current routing point is greater than a side length of the auxiliary frame of the previous routing point. Simultaneously, a size of the auxiliary frame and the offset value are limited. For example, the auxiliary frame is restricted from overlapping another component.

In the solution shown in embodiments of the present disclosure, a radius and a position of the "airport" are specified by using protobuf. A field of neighborhood (an example in which neighborhood1 is the same as neighborhood2 is used) controls a size of the airport, and offset controls the position of the airport. The two values are adjusted to implement the algorithm provided in embodiments of the present disclosure (which may be referred to as an "airport" algorithm), and code may be as follows:

```
            message Terminal {
                message Coord{
                ... ...
                    double x = 1;
                    double x = 2;
                }
              ... ...
              Coord coord = 1;
              ... ...
              repeated double thickness = 3;
              repeated double keepaway = 4;
              Coord offset = 5;
              double neighborhood = 6;
            }
```

Step 703. Obtain a turning angle of a first routing point based on a turning starting position of the first routing point, a turning radius of the first routing point, and position information of a target routing point corresponding to the first routing point,

the first routing point being any one of the at least one routing point.

In some embodiments, the computer device uses the turning starting position of the first routing point as a start point, and uses a position of the target routing point corresponding to the first routing point as an end point, performs turning between the start point and the end point with the turning radius of the first routing point, and calculates a turning angle corresponding to this turning.

In all embodiments of the present disclosure, after the turning starting position and the turning radius of the at least one routing point are determined, a turning angle may be preferably determined in combination with position information of a target routing point corresponding to the at least one routing point. In other words, a number of angles for turning from the turning starting position is determined.

Step 704. Generate a routing path of the first routing point based on the turning starting position of the first routing point, the turning radius of the first routing point, and the turning angle of the first routing point.

In all embodiments of the present disclosure, the computer device uses the turning starting position of the first routing point as the start point, performs turning based on the turning radius of the first routing point and the turning angle of the first routing point, and determines a generated path as the routing path of the first routing point.

The foregoing generating a routing path may refer to generating a point set corresponding to the routing path. For example, the CPW is used as an example. The foregoing routing path may be implemented as a CPW point set. The CPW point set includes position information used for defining the n points on a CPW line laid out on the routing path.

In one embodiment, during generating the routing path, the computer device may further generate, corresponding to the first routing point, parameter information of an arc segment of the routing at a turning point. The parameter information of the arc segment includes an arc parameter and a circle center parameter. The arc parameter may be used for indicating a sorting order of each point included in the arc segment. The foregoing circle center parameter may be used for indicating a circle center position corresponding to the arc segment.

When the foregoing routing is a CPW line, each CPW arc segment group corresponds to two parallel and arc-shaped signal transmission line segments.

The routing path turns at a turning position with the turning radius.

In one embodiment, the routing path corresponding to the foregoing first routing point turns at the turning starting position through the foregoing turning angle based on the turning radius, and extends forward along a tangent direction of a circle in which the arc formed by the foregoing turning is located. In other words, in response to calculating the foregoing turning angle, the target routing point corresponding to the routing point needs to be comprehensively considered.

For example, it is assumed that there are no obstacles between the target routing point and the turning starting position. According to the solution shown in embodiments of the present disclosure, the turning starting positions and the turning radii of the first routing point and the target routing point may be calculated simultaneously. Circles in which arcs are located are respectively determined. The arcs are formed by the first routing point and the target routing point turning at the turning starting positions based on turning radii. Then, a common tangent line between the two circles is calculated, and a direction of the tangent line is the same as extension directions at the first routing point and the target routing point after the first routing point and the target routing point turn at the turning starting positions based on the turning radii. After intersection points of the tangent line and the two circles are calculated, the turning radii of the first routing point and the target routing point may be determined. Then with reference to the turning starting positions and turning angles of the first routing point and the target routing point, a routing path between the first routing point and the target routing point can be drawn.

FIG. 11 is a schematic diagram of routing paths according to an embodiment of the present disclosure. As shown in FIG. 11, compared with turning radii 1102 of routing paths generated according to the classic automatic routing algorithm, turning radii 1101 of routing paths generated according to the solution shown in embodiments of the present disclosure significantly increase and radii of curvature significantly decrease.

In one embodiment, the algorithm used in the solution shown in embodiments of the present disclosure is not only suitable for the dense region, but can also be extended to any routing point in the layout that needs to flexibly adjust a turning radius.

In conclusion, in the solutions shown in embodiments of the present disclosure, based on position information of at least one routing point, a turning starting position where turning starts at the routing point and a turning radius corresponding to a turning curvature are obtained. Based on the obtained turning starting position and turning radius, a routing path is controlled to turn, to control the turning curvature of the routing path during automatic routing, so that an automatic routing algorithm is applicable to automatic routing of a chip that has a requirement in a turning curvature, thereby expanding an applicable scenario of the automatic routing algorithm.

In addition, the solution shown in embodiments of the present disclosure is not limited to horizontal and vertical routing paths. A plurality of routing points can be combined to comprehensively consider an offset parameter and the turning radius. There is no need to route one by one in a sequential routing manner. Routing difficulty can be reduced and routing efficiency can be improved in large-scale chip routing.

In the solution shown in embodiments of the present disclosure, the automatic routing algorithm has more tolerance in selecting a routing path and in routing directions. During implementing automatic routing, a radius of curvature of a line in a dense region (such as CPW) at a turning point may be automatically identified and increased, improving chip development efficiency.

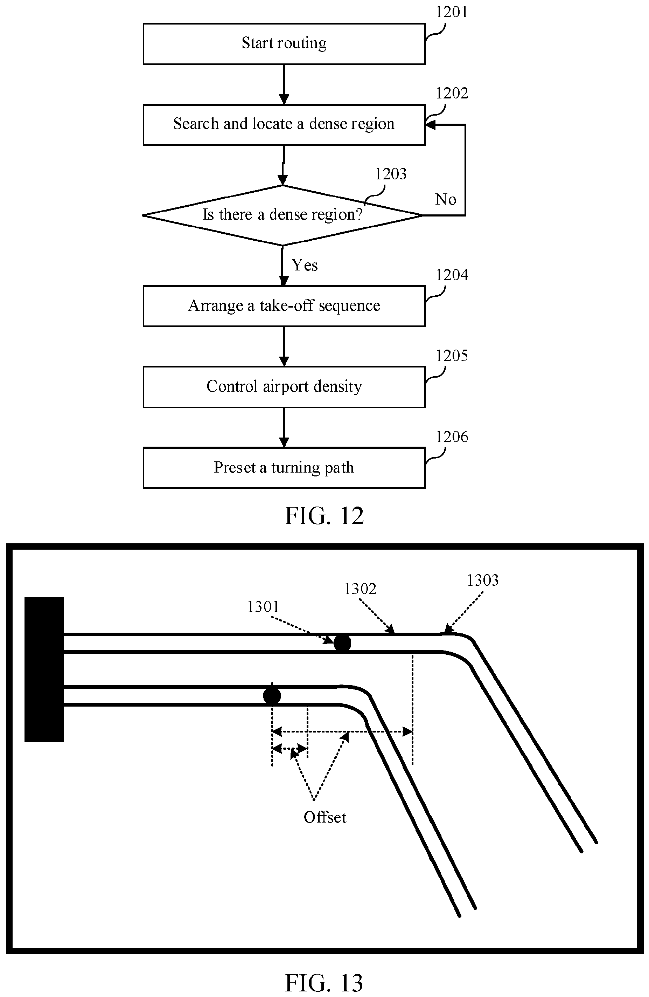

According to a topological routing algorithm, a routing path may be generated according to a circuit routing rule. An important parameter in the rule is a neighborhood parameter, which is usually set to minimum spacing (dense region) between routing lines in a layout to perform automatic routing while ensuring a distance between the lines (for avoiding overlapping and crossing of the lines). However, because the neighborhood parameter is usually a fixed value, when a CPW spacing in the dense region of the layout is small, there may be a problem that curvatures of automatically arranged CPWs obtained in the dense region are too large. Therefore, according to the solution shown in FIG. 4 or FIG. 7, in the solution shown in embodiments of the present disclosure, a new automatic routing algorithm is introduced for processing. A processing flow chart of the automatic routing algorithm may be shown in FIG. 12.

S1201. Start routing.

S1202. Search and locate a dense region.

For example, an automatic routing tool may be used for traversing each of routing points in routing planning information of a circuit layout in ascending order from abscissas/ordinates to search and locate the dense region of the routing points in the circuit layout.

S1203. Determine whether there is a dense region.

For example, when at least two routing points with the same turning direction are found by using the automatic routing tool, and a difference between abscissas and a difference between ordinates of each adjacent two routing points in the at least two routing points are less than difference thresholds, it is determined that there is a dense region of routing points.

S1204. Arrange a take-off sequence.

By using the automatic routing tool, the at least two routing points may be sorted according to reverse directions of turning directions of the at least two routing points in the dense region to obtain a sorting order of the at least two routing points in the dense region.

S1205. Control airport density.

By using the automatic routing tool, offsets of the at least two routing points in the dense region may be set in an incremental manner according to the sorting order of the at least two routing points in the dense region.

S1206. Preset a turning path.

By using the automatic routing tool, turning radii of the at least two routing points in the dense region may be set in an incremental manner according to the sorting order of the at least two routing points in the dense region (in other words, a side length of an airport is set). Then, based on the offsets and the turning radii of the at least two routing points in the foregoing dense region, routing paths in which the at least two routing points turn from turning starting positions are generated. In addition, extension directions at the routing paths after the turning are tangent to circles in which arcs formed in turning positions are located, and the routing paths can be connected to target routing points.

In the solution shown in the above embodiments of the present disclosure, based on the topological routing, an algorithm is developed. According to the algorithm, a dense region of routing can be identified and a radius of curvature of a line (such as a CPW) at a turning point can be customized. This enables to implement an effect of taking into account turning with a small curvature in the dense region during automatic routing, meeting an automatic routing requirement of a superconducting quantum chip. The foregoing solution has the following advantages:
(1) EDA automatic routing for a superconducting quantum chip.
(2) Intelligent identification on a dense region of routing.
(3) A radius of curvature of a CPW line at a turning point is automatically adjusted during routing.
(4) A user is allowed to customize a parameter of radius of curvature according to design requirements.
(5) Efficiency and convenience.

In addition, embodiments of the present disclosure further provide a chip product. The chip includes: at least one routing point, the at least one routing point having a turning starting position and a turning radius on each routing path, and the routing path turning at the turning starting position with the turning radius.

The routing path of the chip product may be obtained according to the method shown in FIG. 4 or FIG. 7 above.

FIG. 13 is a schematic diagram of routing paths of a chip product according to an embodiment of the present disclosure. As shown in FIG. 13, the chip product includes at least one routing point 1301 and a routing path 1302 corresponding to the routing point 1301. The routing path 1302 turns at a turning position 1303 and turns with a specific turning radius to form an arc-shaped turning section.

In a possible implementation, the at least one routing point includes n routing points, and offsets of the n routing points increase according to a sorting order.

As shown in FIG. 13, the offsets of the routing points in the chip product increase in reverse directions of turning directions.

In a possible implementation, turning radii of the n routing points increase according to the sorting order.

As shown in FIG. 13, the turning radii of the routing points in the chip product increase in the reverse directions of the turning directions.

In a possible implementation, in the n routing points, a difference between abscissas of any two adjacent routing points is less than a first difference threshold, and a difference between ordinates of any two adjacent routing points is less than a second difference threshold.

In a possible implementation, the foregoing chip product is a quantum chip, for example, may be a superconducting quantum chip.

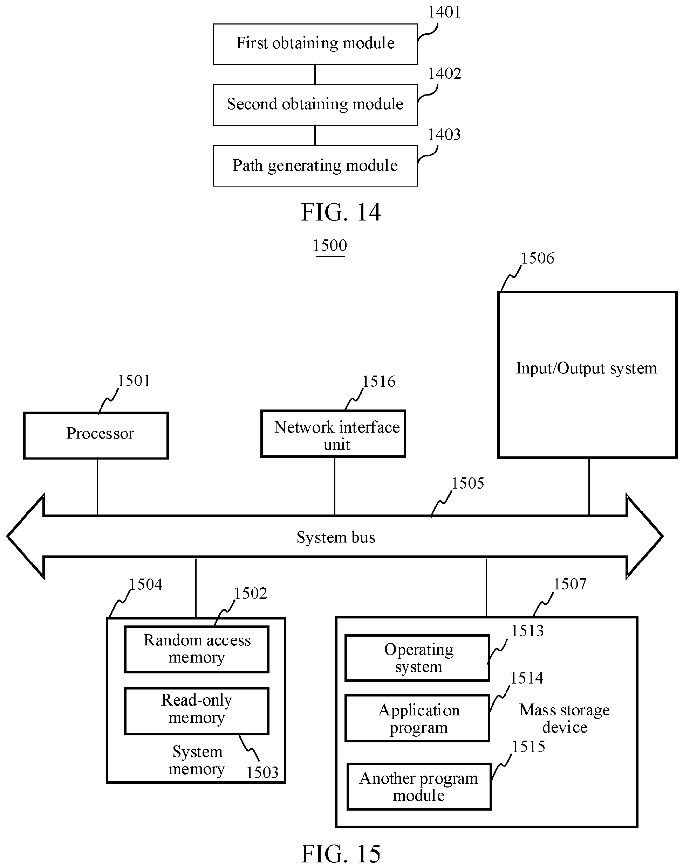

FIG. 14 is a block diagram of a structure of a circuit layout routing apparatus according to an exemplary embodiment. The circuit layout routing apparatus may implement all or part of the steps performed by the computer device in the method provided in the embodiment shown in FIG. 4 or FIG. 7. The circuit layout routing apparatus includes:
a first obtaining module 1401, configured to obtain position information of at least one routing point in a circuit layout from routing planning information of the circuit layout;
a second obtaining module 1402, configured to calculate, based on the position information, a turning starting position and a turning radius corresponding to each of the at least one routing point; and
a path generating module 1403, configured to generate a routing path through the at least one routing point based on the turning starting position and the turning radius, the routing path turning at the turning starting position with the turning radius.

In a possible implementation, the at least one routing point includes n routing points, n being greater than or equal to 2 and n being an integer; and
the second obtaining module 1402 is configured to
obtain a sorting order of the n routing points;
obtain auxiliary frames of the n routing points based on the sorting order of the n routing points and the position information of the n routing points, the auxiliary frames of the n routing points not overlapping each other, the auxiliary frames being U-shaped square frames, and opening directions of the auxiliary frames being the same as routing extension directions at the routing points, and centers of the auxiliary frames being located on extension lines starting at the routing points; and
calculate, based on the auxiliary frames of the n routing points, turning starting positions and turning radii corresponding to the n routing points,
the turning starting positions of the routing points being obtained based on offsets between the centers of the auxiliary frames of the routing points and the routing points, and the turning radii of the routing points being obtained based on side lengths of the auxiliary frames of the routing points.

In a possible implementation, the offsets of the n routing points increase according to the sorting order.

In a possible implementation, the side lengths of the auxiliary frames of the n routing points increase according to the sorting order.

In a possible implementation, the second obtaining module 1402 is configured to obtain the auxiliary frames of the n routing points based on the sorting order of the n routing points, position information of components in the extension directions at the n routing points, and the position information of the n routing points.

In a possible implementation, the second obtaining module 1402 is configured to sort positions of the n routing points according to reverse directions of the turning directions to obtain the sorting order of the n routing points.

In a possible implementation, the first obtaining module 1401 is configured to traverse position information of each routing point in the routing planning information to obtain the position information of the n routing points,
turning directions of the n routing points being the same, and position information of any two adjacent routing points among the n routing points satisfying a specified condition.

In a possible implementation, the specified condition includes:
a difference between abscissas of the any two adjacent routing points is less than a first difference threshold, and a difference between ordinates of the any two adjacent routing points is less than a second difference threshold.

In a possible implementation, the path generating module 1403 is configured to
obtain a turning angle of a first routing point based on a turning starting position of the first routing point, a turning radius of the first routing point, and position information of a target routing point corresponding to the first routing point, the first routing point being any one of the at least one routing point; and
generate a routing path of the first routing point based on the turning starting position of the first routing point, the turning radius of the first routing point, and the turning angle of the first routing point.

In a possible implementation, the foregoing circuit layout is a circuit layout of a superconducting quantum chip.

In conclusion, in the solutions shown in embodiments of the present disclosure, based on position information of at least one routing point, a turning starting position where turning starts at the routing point and a turning radius corresponding to a turning curvature are obtained. Based on the obtained turning starting position and turning radius, a routing path is controlled to turn, to control the turning curvature of the routing path during automatic routing, so that an automatic routing algorithm is applicable to automatic routing of a chip that has a requirement in a turning curvature, thereby expanding an applicable scenario of the automatic routing algorithm.

When the apparatus provided in the foregoing embodiments implements the functions thereof, only division of the foregoing function modules is used as an example for description. In practical application, the foregoing functions may be allocated to different function modules according to requirements to complete. In other words, the internal structure of a device is divided into different function modules, to complete all or some of the foregoing functions. In addition, the apparatus provided in the foregoing embodiments and the method embodiments are based on the same concept. For details of the specific implementation process, refer to the method embodiments. Details are not described herein again.

FIG. 15 is a schematic diagram of a structure of a computer device according to an exemplary embodiment. The computer device 1500 includes a processor 1501, such as a central processing unit (CPU), a system memory 1504 including a random access memory (RAM) 1502 and a read-only memory (ROM) 1503, and a system bus 1505 connecting the system memory 1504 to the processor 1501. The computer device 1500 further includes an input/output system 1506 assisting in transmitting information between components in the computer, and a mass storage device 1507 configured to store an operating system 1513, an application program 1514, and another program module 1515.

The mass storage device 1507 is connected to the processor 1501 by using a mass storage controller (not shown) connected to the system bus 1505. The mass storage device 1507 and a computer-readable medium associated with the mass storage device provide non-volatile storage to the computer device 1500. To be specific, the mass storage device 1507 may include a computer-readable medium (not shown) such as a hard disk or a compact disc read-only memory (CD-ROM) drive.

Generally, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes a RAM, a ROM, a flash memory, or another solid-state storage technology, a CD-ROM, or another optical storage device, a tape cassette, a tape, a disk storage device, or another magnetic storage device. Certainly, a person skilled in the art may know that the computer storage medium is not limited to the foregoing several types. The system memory 1504 and the mass storage device 1507 may be collectively referred to as a memory.

To be specific, the computer device 1500 may be connected to a network or another network device by using a network interface unit 1516 connected to the system bus 1505.

The memory further includes one or more computer instructions. The one or more computer instructions are stored in the memory. The processor 1501 implements all or part of the steps of the method shown in either FIG. 4 or FIG. 7 by executing the one or more computer instructions.

In an exemplary embodiment, a non-transitory computer-readable storage medium including instructions, for example, a memory including a computer program (computer instructions), is further provided, and the foregoing program (instructions) may be executed by a processor in a computer device to complete the methods shown in embodiments of the present disclosure. For example, the non-transitory computer-readable storage medium may be a ROM, a RAM, a CD-ROM, a magnetic tape, a floppy disk, and an optical data storage device.

In an exemplary embodiment, a computer program product or computer program is further provided, including computer instructions that are stored in a computer-readable storage medium. A processor of a computer device reads the computer instructions from the computer-readable storage medium, and the processor executes the computer instructions, so that the computer device performs the method shown in the foregoing embodiments.

## Claims

1. A circuit layout routing method for manufacturing a chip, executable by a computer device, the method comprising:
obtaining position information of at least one routing point in a circuit layout from routing planning information of the circuit layout (41);
calculating, based on the position information, a turning starting position and a turning radius for each of the at least one routing point (42); and
generating a routing path of the chip passing through the at least one routing point based on the turning starting position and the turning radius (43), the routing path turning at the turning starting position with the turning radius;
wherein the at least one routing point comprises n routing points, n being greater than or equal to 2 and n being an integer; and
the calculating, based on the position information, a turning starting position and a turning radius for each of the at least one routing point (42) comprises:
obtaining a sorting order of the n routing points;
obtaining auxiliary frames of the n routing points based on the sorting order of the n routing points and the position information of the n routing points, the auxiliary frames of the n routing points not overlapping each other, the auxiliary frames being U-shaped square frames, and opening directions of the auxiliary frames being the same as routing extension directions at the routing points, and centers of the auxiliary frames being located on extension lines starting at the routing points; and
calculating, based on the auxiliary frames of the n routing points, turning starting positions and turning radii for the n routing points,
the turning starting positions of the routing points being obtained based on offsets between the centers of the auxiliary frames of the routing points and the routing points, and the turning radii of the routing points being obtained based on side lengths of the auxiliary frames of the routing points.

2. The method according to claim 1, wherein the offsets of the n routing points increase according to the sorting order.

3. The method according to claim 1, wherein the side lengths of the auxiliary frames of the n routing points increase according to the sorting order.

4. The method according to claim 1, wherein the obtaining auxiliary frames of the n routing points based on the sorting order of the n routing points and the position information of the n routing points comprises:
obtaining the auxiliary frames of the n routing points based on the sorting order of the n routing points, position information of components in the extension directions at the n routing points, and the position information of the n routing points.

5. The method according to claim 1, wherein turning directions of the routing paths of the n routing points are the same, and the obtaining a sorting order of the n routing points comprises:
sorting positions of the n routing points according to reverse directions of the turning directions to obtain the sorting order of the n routing points.

6. The method according to claim 1, wherein the obtaining position information of at least one routing point in a circuit layout from routing planning information of the circuit layout comprises:
traversing position information of each routing point in the routing planning information to obtain the position information of the n routing points,
turning directions of the n routing points being the same, and position information of any two adjacent routing points among the n routing points satisfying a specified condition.

7. The method according to claim 6, wherein the specified condition comprises:
a difference between abscissas of the any two adjacent routing points is less than a first difference threshold, and a difference between ordinates of the any two adjacent routing points is less than a second difference threshold.

8. The method according to claim 1, wherein the generating a routing path of the chip through the at least one routing point based on the turning starting position and the turning radius (43) comprises:
obtaining a turning angle of a first routing point based on a turning starting position of the first routing point, a turning radius of the first routing point, and position information of a target routing point corresponding to the first routing point (703), the first routing point being any one of the at least one routing point; and
generating a routing path of the first routing point based on the turning starting position of the first routing point, the turning radius of the first routing point, and the turning angle of the first routing point (704).

9. The method according to any one of claims 1 to 8, wherein the circuit layout is a circuit layout of a superconducting quantum chip.

10. A chip product, comprising: at least one routing point,
the at least one routing point having a turning starting position and a turning radius on each routing path, and the routing path turning at the turning starting position with the turning radius, wherein the routing path is obtained according the circuit layout routing method of any one of claims 1 to 9.

11. A circuit layout routing apparatus for a chip to be manufactured, comprising:
a first obtaining module (1401), configured to obtain position information of at least one routing point in a circuit layout from routing planning information of the circuit layout;
a second obtaining module (1402), configured to calculate, based on the position information, a turning starting position and a turning radius for each of the at least one routing point; and
a path generating module (1403), configured to generate a routing path of the chip through the at least one routing point based on the turning starting position and the turning radius, the routing path turning at the turning starting position with the turning radius;
wherein the at least one routing point comprises n routing points, n being greater than or equal to 2 and n being an integer; and
the second obtaining module 1402 is configured to:
obtain a sorting order of the n routing points;
obtain auxiliary frames of the n routing points based on the sorting order of the n routing points and the position information of the n routing points, the auxiliary frames of the n routing points not overlapping each other, the auxiliary frames being U-shaped square frames, and opening directions of the auxiliary frames being the same as routing extension directions at the routing points, and centers of the auxiliary frames being located on extension lines starting at the routing points; and
calculate, based on the auxiliary frames of the n routing points, turning starting positions and turning radii for the n routing points,
the turning starting positions of the routing points being obtained based on offsets between the centers of the auxiliary frames of the routing points and the routing points, and the turning radii of the routing points being obtained based on side lengths of the auxiliary frames of the routing points.

12. The circuit layout routing apparatus of claim 11, wherein the circuit layout routing apparatus comprises a computer device, comprising a processor and a memory, the memory having at least one computer instruction stored therein, and the at least one computer instruction being loaded and executed by the processor to implement the circuit layout routing method according to any one of claims 1 to 9.

13. A computer-readable storage medium, the storage medium having at least one computer instruction stored thereon, and the at least one computer instruction being loaded and executed by a processor to implement the circuit layout routing method according to any one of claims 1 to 9.

14. A computer program product, comprising computer instructions stored on a computer-readable storage medium, the computer instructions being executed by a processor of a computer device to implement the circuit layout routing method according to any one of claims 1 to 9.

## Patentansprüche

1. Schaltungslayoutroutingverfahren zum Herstellen eines Chips, das von einer Computervorrichtung ausführbar ist,
wobei das Verfahren Folgendes umfasst:
Erhalten von Positionsinformationen von mindestens einem Routingpunkt in einem Schaltungslayout aus Routingplanungsinformationen des Schaltungslayouts (41);
Berechnen einer Wendestartposition und eines Wenderadius für jeden des mindestens einen Routingpunkts (42) auf Basis der Positionsinformationen; und
Erzeugen eines Routingpfades des Chips, der den mindestens einen Routingpunkt durchläuft, auf Basis der Wendestartposition und des Wenderadius (43), wobei der Routingpfad an der Wendestartposition mit dem Wenderadius wendet;
wobei der mindestens eine Routingpunkt n Routingpunkte umfasst, wobei n größer als oder gleich 2 ist und wobei n eine Ganzzahl ist; und
das Berechnen einer Wendestartposition und eines Wenderadius für jeden des mindestens einen Routingpunkts (42) auf Basis der Positionsinformationen umfasst Folgendes:
Erhalten einer Sortierreihenfolge der n Routingpunkte;
Erhalten von Zusatzframes der n Routingpunkte auf Basis der Sortierreihenfolge der n Routingpunkte und den Positionsinformationen der n Routingpunkte, wobei die Zusatzframes der n Routingpunkte einander nicht überlappen, wobei die Zusatzframes quadratische U-förmige Frames sind und wobei Öffnungsrichtungen der Zusatzframes dieselben sind wie Routingverlängerungsrichtungen an den Routingpunkten, und wobei sich Mitten der Zusatzframes auf Verlängerungslinien befinden, die an den Routingpunkten beginnen; und
Berechnen von Wendestartpositionen und Wenderadien für die n Routingpunkte auf Basis der Zusatzframes der n Routingpunkte,
wobei die Wendestartpositionen der Routingpunkte auf Basis von Versätzen zwischen den Mitten der Zusatzframes der Routingpunkte und den Routingpunkten erhalten werden, und wobei die Wenderadien der Routingpunkte auf Basis von Seitenlängen der Zusatzframes der Routingpunkte erhalten werden.

2. Verfahren nach Anspruch 1, wobei die Versätze der n Routingpunkte gemäß der Sortierreihenfolge zunehmen.

3. Verfahren nach Anspruch 1, wobei die Seitenlängen der Zusatzframes der n Routingpunkte gemäß der Sortierreihenfolge zunehmen.

4. Verfahren nach Anspruch 1, wobei das Erhalten von Zusatzframes der n Routingpunkte auf Basis der Sortierreihenfolge der n Routingpunkte und der Positionsinformationen der n Routingpunkte Folgendes umfasst:
Erhalten der Zusatzframes der n Routingpunkte auf Basis der Sortierreihenfolge der n Routingpunkte, von Positionsinformationen von Komponenten in den Verlängerungsrichtungen der n Routingpunkte und der Positionsinformationen der n Routingpunkte.

5. Verfahren nach Anspruch 1, wobei Wenderichtungen der Routingpfade der n Routingpunkte dieselben sind und das Erhalten einer Sortierreihenfolge der n Routingpunkte Folgendes umfasst:
Sortieren von Positionen der n Routingpunkte gemäß Rückwärtsrichtungen der Wenderichtungen, um die Sortierreihenfolge der n Routingpunkte zu erhalten.

6. Verfahren nach Anspruch 1, wobei das Erhalten von Positionsinformationen von mindestens einem Routingpunkt in einem Schaltungslayout aus Routingplanungsinformationen des Schaltungslayouts Folgendes umfasst:
Durchgehen von Positionsinformationen von jedem Routingpunkt in den Routingplanungsinformationen, um die Positionsinformationen der n Routingpunkte zu erhalten,
wobei Wenderichtungen der n Routingpunkte dieselben sind, und wobei Positionsinformationen von jeweils zwei benachbarten Routingpunkten unter den n Routingpunkten eine spezifizierte Bedingung erfüllen.

7. Verfahren nach Anspruch 6, wobei die spezifizierte Bedingung Folgendes umfasst:
eine Differenz zwischen Abszissen von beliebigen zwei benachbarten Routingpunkten ist kleiner als ein erster Differenzschwellwert, und eine Differenz zwischen Ordinaten der beliebigen zwei benachbarten Routingpunkte ist kleiner als ein zweiter Differenzschwellwert.

8. Verfahren nach Anspruch 1, wobei das Erzeugen eines Routingpfades des Chips durch den mindestens einen Routingpunkt auf Basis der Wendestartposition und des Wenderadius (43) Folgendes umfasst:
Erhalten eines Wendewinkels eines ersten Routingpunkts auf Basis einer Wendestartposition des ersten Routingpunkts, eines Wenderadius des ersten Routingpunkts und von Positionsinformationen eines Zielroutingpunkts, der dem ersten Routingpunkt entspricht (703), wobei der erste Routingpunkt einer des mindestens einen Routingpunkts ist; und
Erzeugen eines Routingpfades des ersten Routingpunkts auf Basis der Wendestartposition des ersten Routingpunkts, des Wenderadius des ersten Routingpunkts und des Wendewinkels des ersten Routingpunkts (704).

9. Verfahren nach einem der Ansprüche 1 bis 8, wobei das Schaltungslayout ein Schaltungslayout eines supraleitenden Quantenchips ist.

10. Chipprodukt, das Folgendes umfasst: mindestens einen Routingpunkt,
wobei der mindestens eine Routingpunkt eine Wendestartposition und einen Wenderadius auf jedem Routingpfad aufweist, und wobei der Routingpfad an der Wendestartposition mit dem Wenderadius wendet, wobei der Routingpfad gemäß dem Schaltungslayoutroutingverfahren nach einem der Ansprüche 1 bis 9 erhalten wird.

11. Schaltungslayoutroutingeinrichtung für einen herzustellenden Chip, die Folgendes umfasst:
ein erstes Erhaltungsmodul (1401), das dazu ausgelegt ist, Positionsinformationen von mindestens einem Routingpunkt in einem Schaltungslayout aus Routingplanungsinformationen des Schaltungslayouts zu erhalten;
ein zweites Erhaltungsmodul (1402), das dazu ausgelegt ist, eine Wendestartposition und einen Wenderadius für jeden des mindestens einen Routingpunkts auf Basis der Positionsinformationen zu berechnen; und
ein Pfaderzeugungsmodul (1403), das dazu ausgelegt ist, einen Routingpfad des Chips durch den mindestens einen Routingpunkt auf Basis der Wendestartposition und des Wenderadius zu erzeugen, wobei der Routingpfad an der Wendestartposition mit dem Wenderadius wendet;
wobei der mindestens eine Routingpunkt n Routingpunkte umfasst, wobei n größer als oder gleich 2 ist und wobei n eine Ganzzahl ist; und
das zweite Erhaltungsmodul (1402) ist zu Folgendem ausgelegt:
Erhalten einer Sortierreihenfolge der n Routingpunkte;
Erhalten von Zusatzframes der n Routingpunkte auf Basis der Sortierreihenfolge der n Routingpunkte und der Positionsinformationen der n Routingpunkte, wobei die Zusatzframes der n Routingpunkte einander nicht überlappen, wobei die Zusatzframes quadratische U-förmige Frames sind und wobei Öffnungsrichtungen der Zusatzframes dieselben sind wie Routingverlängerungsrichtungen an den Routingpunkten, und wobei sich Mitten der Zusatzframes auf Verlängerungslinien befinden, die an den Routingpunkten beginnen; und
Berechnen von Wendestartpositionen und Wenderadien für die n Routingpunkte auf Basis der Zusatzframes der n Routingpunkte,
wobei die Wendestartpositionen der Routingpunkte auf Basis von Versätzen zwischen den Mitten der Zusatzframes der Routingpunkte und den Routingpunkten erhalten werden, und wobei die Wenderadien der Routingpunkte auf Basis von Seitenlängen der Zusatzframes der Routingpunkte erhalten werden.

12. Schaltungslayoutroutingeinrichtung nach Anspruch 11, wobei die Schaltungslayoutroutingeinrichtung eine Computervorrichtung umfasst, die einen Prozessor und einen Speicher umfasst, wobei der Speicher eine darin gespeicherte Computeranweisung aufweist, und wobei die mindestens eine Computeranweisung vom Prozessor geladen und ausgeführt wird, um das Schaltungslayoutroutingverfahren nach einem der Ansprüche 1 bis 9 zu implementieren.

13. Computerlesbares Speichermedium, wobei auf dem Speichermedium mindestens eine Computeranweisung gespeichert ist, und wobei die mindestens eine Computeranweisung von einem Prozessor geladen und ausgeführt wird, um das Schaltungslayoutroutingverfahren nach einem der Ansprüche 1 bis 9 zu implementieren.

14. Computerprogrammprodukt, das Computeranweisungen umfasst, die auf einem computerlesbaren Speichermedium gespeichert sind, wobei die Computeranweisungen von einem Prozessor einer Computervorrichtung ausgeführt werden, um das Schaltungslayoutroutingverfahren nach einem der Ansprüche 1 bis 9 zu implementieren.

## Revendications

1. Procédé de routage d'agencement de circuit pour la fabrication d'une puce, exécutable par un dispositif informatique, le procédé comprenant les étapes suivantes :
obtenir des informations de position d'au moins un point de routage dans un agencement de circuit à partir d'informations de planification de routage de l'agencement de circuit (41) ;
calculer, sur la base des informations de position, une position de début de courbure et un rayon de courbure pour chacun du ou des point de routage (42) ; et
générer un chemin de routage de la puce passant par l'au moins un point de routage sur la base de la position de début de courbure et du rayon de courbure (43), le chemin de routage tournant à la position de début de courbure avec le rayon de courbure ;
dans lequel l'au moins un point de routage comprend n points de routage, n étant supérieur ou égal à 2 et n étant un nombre entier ; et
le calcul, sur la base des informations de position, d'une position de début de courbure et un rayon de courbure pour chacun du ou des point de routage (42) comprend ce qui suit :
obtenir un ordre de tri des n points de routage ;
obtenir des cadres auxiliaires des n points de routage sur la base de l'ordre de tri des n points de routage et des informations de position des n points de routage, les cadres auxiliaires des n points de routage ne se chevauchant pas, les cadres auxiliaires étant des cadres carrés en forme de U, et les directions d'ouverture des cadres auxiliaires étant les mêmes que les directions d'extension de routage aux points de routage, et les centres des cadres auxiliaires étant situés sur des lignes d'extension partant des points de routage ; et
calculer, sur la base des cadres auxiliaires des n points de routage, des positions de début de courbure et des rayons de courbure pour les n points de routage,
les positions de début de courbure des points de routage étant obtenues sur la base des décalages entre les centres des cadres auxiliaires des points de routage et les points de routage, et les rayons de courbure des points de routage étant obtenus sur la base des longueurs latérales des cadres auxiliaires des points de routage.

2. Procédé selon la revendication 1, dans lequel les décalages des n points de routage augmentent selon l'ordre de tri.

3. Procédé selon la revendication 1, dans lequel les longueurs latérales des cadres auxiliaires des n points de routage augmentent selon l'ordre de tri.

4. Procédé selon la revendication 1, dans lequel l'obtention des cadres auxiliaires des n points de routage sur la base de l'ordre de tri des n points de routage et des informations de position des n points de routage comprend ce qui suit :
obtenir les cadres auxiliaires des n points de routage sur la base de l'ordre de tri des n points de routage, d'informations de position des composants dans les directions d'extension au niveau des n points de routage, et des informations de position des n points de routage.

5. Procédé selon la revendication 1, dans lequel les directions de courbure du chemin de routages des n points de routage sont les mêmes, et l'obtention d'un ordre de tri des n points de routage comprend ce qui suit :
trier les positions des n points de routage selon les directions inverses des directions de courbure afin d'obtenir l'ordre de tri des n points de routage.

6. Procédé selon la revendication 1, dans lequel l'obtention d'informations de position d'au moins un point de routage dans un agencement de circuit à partir d'informations de planification de routage de l'agencement de circuit comprend ce qui suit :
parcourir les informations de position de chaque point de routage dans les informations de planification de routage afin d'obtenir les informations de position des n points de routage,
les directions de courbure des n points de routage étant les mêmes, et les informations de position de deux quelconques points de routage adjacents parmi les n points de routage satisfaisant à une condition spécifiée.

7. Procédé selon la revendication 6, dans lequel la condition spécifiée comprend ce qui suit :
une différence entre les abscisses des deux quelconques points de routage adjacents est inférieure à un premier seuil de différence, et une différence entre les ordonnées des deux quelconques points de routage adjacents est inférieure à un deuxième seuil de différence.

8. Procédé selon la revendication 1, dans lequel la génération d'un chemin de routage de la puce à travers l'au moins un point de routage sur la base de la position de début de courbure et le rayon de courbure (43) comprend ce qui suit :
obtenir un angle de courbure d'un premier point de routage sur la base d'une position de début de courbure du premier point de routage, un rayon de courbure du premier point de routage, et des informations de position d'un point de routage cible correspondant au premier point de routage (703), le premier point de routage étant l'un quelconque du ou des points de routage ; et
générer un chemin de routage du premier point de routage sur la base de la position de début de courbure du premier point de routage, du rayon de courbure du premier point de routage et de l'angle de courbure du premier point de routage (704).

9. Procédé selon l'une des revendications 1 à 8, dans lequel l'agencement de circuit est un agencement de circuit d'une puce quantique supraconductrice.

10. Produit à puce, comprenant :
au moins un point de routage,
l'au moins un point de routage ayant une position de début de courbure et un rayon de courbure sur chaque chemin de routage, et le chemin de routage tournant à la position de début de courbure avec le rayon de courbure, dans lequel le chemin de routage est obtenu selon le procédé de routage d'agencement de circuit de l'une des revendications 1 à 9.

11. Appareil de routage d'agencement de circuit pour une puce à fabriquer, comprenant :
un premier module d'obtention (1401) configuré pour obtenir des informations de position d'au moins un point de routage dans un agencement de circuit à partir d'informations de planification de routage de l'agencement de circuit ;
un deuxième module d'obtention (1402) configuré pour calculer, sur la base des informations de position, une position de début de courbure et un rayon de courbure pour chacun du ou des point de routage ; et
un module de génération de chemin (1403) configuré pour générer un chemin de routage de la puce passant par l'au moins un point de routage sur la base de la position de début de courbure et du rayon de courbure, le chemin de routage tournant à la position de début de courbure avec le rayon de courbure ;
dans lequel l'au moins un point de routage comprend n points de routage, n étant supérieur ou égal à 2 et n étant un nombre entier ; et
le deuxième module d'obtention (1402) est configuré pour :
obtenir un ordre de tri des n points de routage ;
obtenir des cadres auxiliaires des n points de routage sur la base de l'ordre de tri des n points de routage et des informations de position des n points de routage, les cadres auxiliaires des n points de routage ne se chevauchant pas, les cadres auxiliaires étant des cadres carrés en forme de U, et les directions d'ouverture des cadres auxiliaires étant les mêmes que les directions d'extension de routage aux points de routage, et les centres des cadres auxiliaires étant situés sur des lignes d'extension partant des points de routage ; et
calculer, sur la base des cadres auxiliaires des n points de routage, des positions de début de courbure et des rayons de courbure pour les n points de routage,
les positions de début de courbure des points de routage étant obtenues sur la base des décalages entre les centres des cadres auxiliaires des points de routage et les points de routage, et les rayons de courbure des points de routage étant obtenus sur la base des longueurs latérales des cadres auxiliaires des points de routage.

12. Appareil de routage d'agencement de circuit selon la revendication 11, dans lequel l'appareil de routage d'agencement de circuit comprend un dispositif informatique comprenant un processeur et une mémoire, la mémoire ayant au moins une instruction informatique stockée sur celle-ci, et l'au moins une instruction informatique étant chargée et exécutée par le processeur pour mettre en œuvre le procédé de routage d'agencement de circuit selon l'une des revendications 1 à 9.

13. Support de stockage lisible par ordinateur, le support de stockage ayant au moins une instruction informatique stockée sur celui-ci, et l'au moins une instruction informatique étant chargée et exécutée par un processeur pour mettre en œuvre le procédé de routage d'agencement de circuit selon l'une des revendications 1 à 9.

14. Produit de programme informatique comprenant des instructions informatiques stockées sur un support de stockage lisible par ordinateur, les instructions informatiques étant exécutées par un processeur d'un dispositif informatique pour mettre en œuvre le procédé de routage d'agencement de circuit selon l'une des revendications 1 à 9.
